(19)

Europäisches
Patentamt
European
Patent Office
Office européen
des brevets

(11)     EP 2 196 916 A1

(12)                        EUROPEAN PATENT APPLICATION

(43) Date of publication:
     16.06.2010  Bulletin 2010/24

(51) Int Cl.:
     *G06F 13/28* (2006.01)     *G06F 13/42* (2006.01)

(21) Application number: 09157648.8

(22) Date of filing: 08.04.2009

(84) Designated Contracting States:
     AT BE BG CH CY CZ DE DK EE ES FI FR GB GR
     HR HU IE IS IT LI LT LU LV MC MK MT NL NO PL
     PT RO SE SI SK TR
     Designated Extension States:
     AL BA RS

(30) Priority: 12.12.2008 EP 08171556

(71) Applicant: IHP GmbH-Innovations for High
     Performance
     Microelectronics / Leibniz-Institut für innovative
     Mikroelektronik
     15236 Frankfurt / Oder (DE)

(72) Inventors:
     • Krstic, Milos
       15232  Frankfurt/Oder (RS)
     • Grass, Eckhard
       12589 Berlin (DE)
     • Fan, Xin
       15230 Frankfurt (Oder) (DE)
     • Gürkaynak, Frank
       8006 Zürich (CH)

(74) Representative: Eisenführ, Speiser & Partner
     Anna-Louisa-Karsch-Strasse 2
     10178 Berlin (DE)

(54)   **GALS circuit block and GALS circuit device suitable for bursty data transfer**

(57)   The present invention relates to a method for controlling data transfer from a first GALS circuit block to a second GALS circuit block. The proposed method comprises: locking first and second locally synchronous circuit blocks of the first and the second GALS circuit block, respectively, to a local clock source of either the first or the second GALS circuit block during the data transfer. Further, the present invention relates to a master GALS circuit block and a slave GALS circuit block, both configured to execute the method. Main advantages of the proposed method and the GALS circuits are that they allow a high rated data transfer, in particular a burst data transfer, between two GALS circuit blocks while simultaneously necessitating only very few means for implementation.

Fig. 1

EP 2 196 916 A1

**Description**

The invention concerns a method for controlling a bursty data transfer from a first GALS circuit block to a second GALS circuit block. Further, the invention concerns a slave circuit block and a master circuit block suitable for bursty data transfer. Ultimately, the invention concerns an integrated circuit comprising GALS circuits suitable for bursty data transfer and an integrated circuit which is configured to perform a method for controlling a bursty data transfer.

Globally asynchronous locally synchronous (GALS) circuits are a relatively new approach in the design of very large scale integration (VLSI) systems. A main advantage of this design method is its high flexibility due to the abandonment of a global clock. This abandonment avoids typical design problems like high electro magnetic interference and complex routing of clock signal conduction lines.

A conventional GALS circuit comprises a plurality of locally synchronous (abbreviated: LS) functional blocks which are clocked by a respective locally synchronous frequency. Those locally synchronous circuit blocks communicate with each other asynchronously, for example by means of a handshake protocol or other asynchronous protocols. There is therefore no need for the individual, locally synchronized circuit blocks also to be globally synchronized with each other. As long as each individual locally synchronous block follows an asynchronous protocol, those circuit blocks can be combined together in any manner.

A GALS architecture is distinguished by a modular structure which permits a high level of flexibility in the circuit design. As the interface in relation to any locally synchronous circuit module is asynchronous, any synchronous circuits can be integrated with each other. Any locally synchronous circuit block can have a time raster with an individual clock signal frequency.

For the execution of the asynchronous communication between the locally synchronous circuit blocks, they each have a respective asynchronous wrapping circuit which is also referred to as an 'asynchronous wrapper'. An asynchronous wrapper has input and output ports as well as a local clock signal generator, the latter being also referred to as a 'clock source'. Each port of the wrapper, that is to say each input and each output, has an associated port control which is responsible for conversion of an asynchronous protocol. The port and the control together form an input unit and an output unit, respectively. The clock signal generator of an asynchronous wrapper is adapted to produce the clock signal at a signal frequency which is tuneable in a given frequency range. An important feature of clock signal generators for asynchronous wrappers is that the production of the clock signal can be interrupted (it is pausable). Within the scope of this application, the saying circuit block will sometimes be simply abbreviated with 'circuit'.

The publication by J. Muttersbach, T. Villiger, W. Fichtner: "Practical Design of Globally-Asynchronous Locally-Synchronous Systems" in Proceedings of the Sixth International Symposium on Advanced Research in Asynchronous Circuits and Systems, ASYNC'2000, Eilat, Israel, pp. 52-59, April 2-6, 2000 discloses that one of the mostly used globally asynchronous locally synchronous interfaces is based on pausable clocking.

When a pausable clock is applied, a general problem comes into being which will shortly be outlined: During communication between two circuit blocks, one of the two communicating circuit blocks produces and sends a stretch signal to the clock signal generator when a request signal of an adjacent preceding circuit block was received at the input or a request signal was sent at the output to an adjacent subsequent circuit block. The stretch signal is present at a control input of the clock signal generator until a handshake has taken place for data exchange with an adjacent circuit. However, as long as the stretch signal is present, the delivery of the next clock signal from the clock signal generator to the synchronous circuit block is delayed. In that way circuit blocks can be individually internally synchronously clock controlled and at the same time exchange data asynchronously with circuit blocks in the environment. However, the intensive stretching of data with every clock cycle diminishes the data throughput performance.

One idea to avoid the aforementioned problem is presented in the publication by M. Krstić, E. Grass, C. Stahl, M. Piz: "System Integration by Request-driven GALS Design" in IEEE Proc. Computers & Digital Techniques, Vol. 153, Issue 5, September 2006, pp. 362-372. However, the introduced so called request-driven approach features a very complex structure and a comparatively low data throughput.

The technical object of the present invention is therefore to provide a method or a circuit which allows supplying two or more GALS circuit blocks with clock pulses in such a manner that a communication between the two or more GALS circuit blocks with a high data throughput rate is possible.

In accordance with a first aspect of the invention that object is attained by a method of claim 1. The method for controlling data transfer from a first GALS circuit block to a second GALS circuit block comprises locking first and second locally synchronous circuit blocks of the first and the second GALS circuit block, respectively, to a local clock source of either the first or the second GALS circuit block during the data transfer.

The invention is based on the recognition that it appears unnecessary to synchronize the clocks for each clock cycle when large data packets are being transferred between the first and the second locally synchronous circuit blocks. Hereinafter, the transfer of large data packets between two locally synchronous circuit blocks, that is also to say between two GALS circuit blocks, will also be referred to as a 'bursty data transfer' or simply a 'burst mode'. The invention suggests utilizing a single clock during burst mode for both clock domains or to lock both clock sources to the same clock frequency.

During the burst transfer, both locally synchronous circuit blocks hence use a common clock with a same frequency. When the data is finally transferred, the LS circuit blocks can again be triggered with their own independent clock sources. As a result, for a bursty data transfer the two locally synchronous circuit blocks are synchronized only once shortly before the beginning of the transfer without any additional synchronization procedures being necessary during the actual transfer. Application of the proposed method thus allows stable and high throughput transfer of data packets between a first and a second LS circuit block of a GALS system.

Further, implementing the method with means of GALS circuit elements, the method yields, in the broader sense, a significantly improved architecture in respect to power saving aspects, in particular to dynamic voltage and frequency scaling as well as to power gating and clock gating, and in respect to circuit complexity. Also, one main advantage of GALS systems, namely the, in comparison to classical synchronous systems improved electro magnetic interference (EMI) characteristic, remains maintained while applying the proposed method.

In the following, different embodiments of the first aspect of the invention are described. The combination of features of different embodiments can lead to further embodiments if the formers are not explicitly described as being alternative to each other.

Principally, the case that the first locally synchronous circuit block is locked to the local clock source of the second local locally synchronous circuit block and the reverse case are equally possible. Each respective locally synchronous circuit block is designed for a certain frequency; however, the respective locally synchronous circuit block is in most cases also adopted to operate at a lower frequency than the frequency for which it was designed. A preferred general rule thus is to lock the first and second locally synchronous circuit blocks to that local clock source of the first and second local clock sources, whichever has a lower clock frequency.

The reverse case, that is, where the first and second locally synchronous circuit blocks of the first and the second GALS circuit block are locked to that local clock source of the first and second local clock sources, whichever has a higher clock frequency, is also possible and of interest for some application fields.

In a non-transfer mode, the two GALS circuit blocks are triggered by their respective pausable clock generators. An upcoming data transfer can be regulated with the help of master and slave clock controllers. In one embodiment of the method, locking thus comprises

- providing a first signal from a first locally synchronous circuit of the first GALS circuit block to a master clock controller of the first GALS circuit block, the first signal indicating that the data transfer is to be initiated;

- providing a transfer-request signal from the master clock controller to a slave clock controller of the second GALS circuit block;

- providing a first clock signal from a first pausable clock generator of the first GALS circuit block to the first locally synchronous circuit block and to the slave clock controller;

- providing a lock signal from the slave clock controller to a pausable second clock generator of the second GALS circuit block, the lock signal instructing the second clock generator to pause generating a second clock signal; and

- providing the first clock signal from the slave clock controller to the second locally synchronous circuit.

Accordingly, in this embodiment, an upcoming data transfer is first announced with the first signal from the first LS circuit block. As a result, the slave clock controller of the second LS circuit block is reassigned from its own second clock generator to the first clock generator of the first LS circuit block. This is indicated with the activation of the lock signal, which in the first instance causes the second clock generator to stop. The lock signal, in general, indicates the necessity that one of the clock generators has to be locked to the other clock generator. After stopping, that is to say after pausing the second clock generator to generate the second clock signal, the first clock signal is provided to the second locally synchronous circuit block. Both locally synchronous circuit blocks now being locked to the same clock source, data transfer between the blocks can be executed. After the transfer, the two LS circuit blocks are again triggered with their own respective clock generators.

An important advantage is that only one unique synchronization procedure is necessary to initiate and clock the data transfer between the two LS blocks. Additional synchronization procedures now being dispensable, a data transfer with a high throughput is enabled, that is to say, with a high data rate. As the method is rather non-complex, only few circuit elements are necessary to implement the method.

In the aforementioned embodiment of the method, the slave clock controller preferably arbitrates between the transfer-request signal and the second clock signal. It forwards to the second locally synchronous circuit either the transfer-request signal as an indicator signal of an initiated data transfer or the second local clock signal, whichever arrives first at the slave clock controller.

When no data is to be transferred, the second LS circuit block is supplied with the local clock signal. However, if the first LS circuit block indicates an upcoming data transfer with the transfer-request signal, the transfer-request signal is forwarded as the indicator signal to the second LS circuit block, thus notifying the second LS circuit block that data is being transferred.

In a further embodiment of the method of the first aspect of the invention, the lock signal is generated by latching the indicator signal with the first clock signal. This way, it is avoided that the second clock generator is locked when the first clock signal has a HIGH level, thus improving the stability.

In accordance with a second aspect of the invention, the technical object is attained by a slave GALS circuit block, comprising a second locally synchronous circuit, a pausable local second clock generator, which is configured to generate a second local clock signal for driving the second locally synchronous circuit, and an second asynchronous wrapper.

The second asynchronous wrapper comprises a slave clock controller, which is configured to receive a transfer-request signal from a first external GALS circuit and to receive the first clock signal from the first external GALS circuit block. Also the slave clock controller is configured to receive the second local clock signal from the second clock generator and to forward the first clock signal in presence of the transfer-request signal, and to forward the second clock signal in absence of the transfer-request signal.

The slave GALS circuit block of the second aspect of the invention shares the advantages of the method of the first aspect of the invention and its herein listed embodiments.

Within a non-transfer mode, the slave GALS circuit operates like a "conventional" GALS circuit. However, the slave GALS circuit of the second aspect of the invention comprises a slave clock controller which is adopted to either forward the first clock signal from a first external GALS circuit or the second clock signal itself to the second LS circuit block in dependence of the transfer-request signal; therefore being able to be locked to the clock generator of the first external GALS circuit block during data transfer.

In one embodiment of the second aspect of the invention, the slave clock controller of the GALS circuit block is further configured to provide a lock signal to the second clock generator, the lock signal instructing the second clock generator to pause generating the second clock signal. Before receiving the first clock signal from the first GALS circuit block, the second clock generator is usually paused by means of the lock signal.

In a further embodiment of the second aspect of the invention, the slave clock controller comprises an arbiter, which is configured to arbitrate between the transfer-request signal and the second clock signal and to forward either the transfer-request signal as an indicator signal of an initiated data transfer to the second locally synchronous circuit or the second local clock signal, whichever arrives first at the arbiter.

When no data is to be transferred, the slave clock controller supplies the second LS circuit block with the local second clock signal. However, if the first external GALS circuit block indicates an upcoming data transfer with the transfer-request signal, the slave clock controller forwards the transfer-request signal as the indicator signal to the second LS circuit block, thus notifying the second LS circuit block that data is being transferred.

Also, in a preferred embodiment of the second aspect of the invention, the slave GALS circuit block comprises a latch, which is connected with the arbiter, and which is configured to receive the first clock signal from the first external GALS circuit block and to generate the lock signal by latching the indicator signal with the first clock signal.

Latching the indicator signal with the first clock signal and thus generating the lock signal is motivated by stability reasons. If the lock signal is latched with the first clock signal, it is avoided that the second clock generator is locked when the first clock signal has a HIGH level.

For synchronization reasons, it is advantageous that the lock signal is fed to a multiplexer, which is also connected with the arbiter to receive the second local clock signal, if output by the arbiter.

Thus, the lock signal controls the status of the multiplexer. The multiplexer comprises two signal inputs, one for the second clock signal and one for the first clock signal. If the lock signal is set due to the transfer-request signal, the multiplexer forwards first clock signal. If the lock signal is inactive, the multiplexer forwards the second clock signal to the second LS circuit block.

Optionally, the slave GALS circuit block is configured to provide the indicator signal to the first external GALS circuit as an acknowledgement of receiving the transfer-request signal, thus indicating that the second clock generator is not active.

In accordance with a third aspect of the invention, the technical object is attained by a master GALS circuit block, comprising a first locally synchronous circuit, a pausable local first clock generator, which is configured to generate a first local clock signal for driving the first locally synchronous circuit and a first asynchronous wrapper.

The first asynchronous wrapper comprises a master clock controller, which is configured to receive a first signal from the first locally synchronous circuit, the first signal indicating that the data transfer is to be initiated.

Also, the master clock controller is configured to provide a transfer-request signal to a second external GALS circuit and to provide the first clock signal to the second external GALS circuit block.

The master GALS circuit block of the third aspect of the invention shares the advantages of the method of the first aspect of the invention an its herein listed embodiments.

The master GALS circuit block of the third aspect of the invention and the slave master GALS circuit block of the second aspect of the invention allow the implementation of the method of the first aspect of the invention. During data transfer, both the master and the slave GALS circuit blocks feature an enhanced electro magnetic interference characteristic in comparison to conventional GALS circuit blocks which are clocked by standard clock generators. Further, both master and slave GALS circuit blocks exhibit an improved architecture for power saving methods such as dynamic voltage and frequency scaling as well as power gating and clock gating.

In a first embodiment of the master GALS circuit block of the third aspect of the invention, it is for synchronization reasons advantageous that the master clock controller is configured to provide a pause signal to the first clock generator, instructing the first clock generator to pause generation of the first clock signal, until receiving an acknowledgement signal from the second external GALS circuit. When receiving the acknowledgement signal form the second external GALS circuit, the first clock signal is again triggered and supplies both the first LS circuit block as well as the second LS circuit block with its clock signal.

In a preferred third embodiment of the of the third aspect of the invention, the master GALS circuit block comprises a slave clock controller, which is configured to receive a transfer-request signal from a third external GALS circuit and to receive a third clock signal from the third external GALS circuit block.

Further, the slave clock controller is configured to receive the first local clock signal from the first clock generator and to forward the third clock signal in presence of the transfer-request signal, and to forward the first clock signal in absence of the transfer-request signal.

In this embodiment, the master GALS circuit block is configured to either lock a LS circuit block of an external third GALS circuit block to its first clock generator or to lock its own first LS circuit block to the third clock signal from the third external GALS circuit block. This configuration of the master GALS circuit block yields a high level of flexibility within the design of a GALS device with a plurality of GALS circuits.

In accordance with a fourth aspect of the invention, the technical object is attained by an integrated circuit device which comprises the master GALS circuit block of the third aspect of the invention and the slave GALS circuit block of the second aspect of the invention.

The integrated circuit device of the fourth aspect of the invention shares the advantages of the slave GALS circuit block of the second aspect of the invention and the master GALS circuit block of the third aspect of the invention and their herein named embodiments.

In accordance with a fifth aspect of the invention, the technical object is attained by an integrated circuit device, which is configured to perform the method of the first aspect of the invention.

The integrated circuit device of the fifth aspect of the invention shares the advantages of the method of the first aspect of the invention and its herein listed embodiments.

For systems that predominantly do not support bursty data transfer it is also possible to execute the proposed method of the first aspect of the invention or to implement the GALS circuit blocks of the second and third aspect of the invention, respectively. However, due to an initial synchronization delay, advantageous effects of the invention come in particular into being, when large data packets, that is to say bursts, are being transferred. For frequent single data transfers, standard clocking of the data transfer may be of advantage. For such system, it is possible to introduce different ports to decouple single data transfer commands and bursty data transfer commands: For single data transfers, classical pausable clocking interfaces are used; for bursts, the method of the first aspect of the invention or the GALS circuit blocks of the second and third aspect of the invention, respectively, are applied. Alternatively, it is possible to modify the burst interfaces to support the special mode of the single data transfers. For such single data transfer requests no clock locking is performed but a data transfer based on standard pausable clocking mechanisms. The introduction of this port extension requires certain modification of the port specification, such as differentiating single and burst transfer requests and disabling the locking procedure for single data transfer. However, such modifications can yield a higher complexity of the burst port controllers. Therefore, it is advisable to use the burst controllers for systems with predominantly support bursty data transfer and, if necessary, add adopted additional standard GALS controllers for single data transfers.

Further features and advantages of the invention are made clear hereinafter by means of the description of embodiments by way of example with reference to the accompanying figures in which

Fig. 1  shows a schematic circuit diagram of a master GALS circuit block coupled to a slave GALS circuit block;

Fig. 2  shows a logic specification diagram of a master clock controller;

Fig. 3  shows an adopted clock generator for either a master GALS circuit block or a slave GALS circuit block; and

Fig. 4  shows a simulated signal flow during the transfer of data between a master and a slave GALS circuit block.

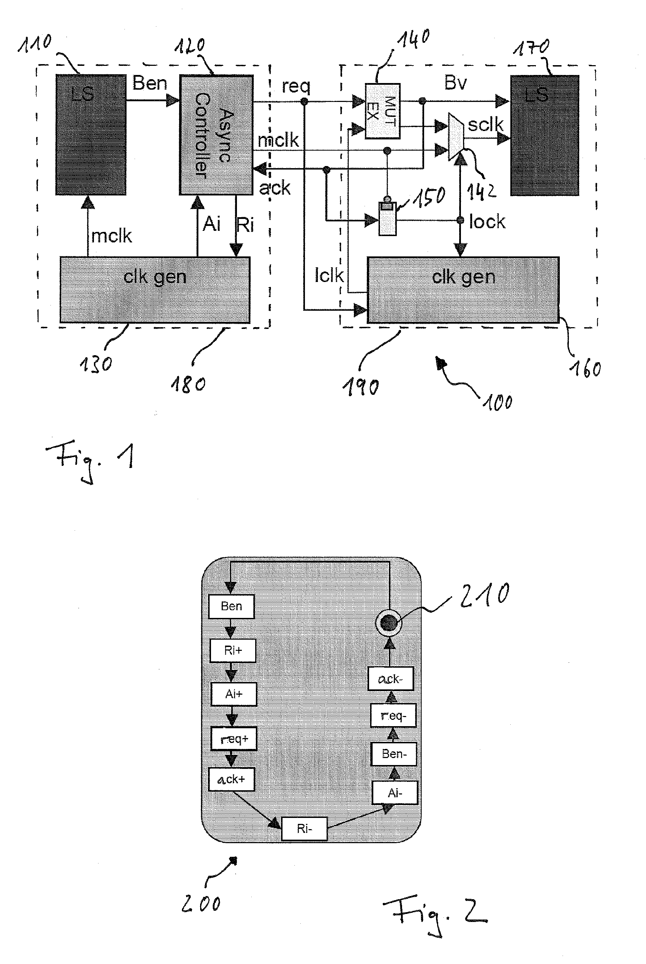

Fig. 1 shows exemplary a simplified circuit diagram of a master and a slave GALS circuit block when being coupled to each other. The master GALS circuit block 180 comprises the first LS circuit block 110, the first clock generator 130 and the master clock controller. The master GALS circuit block is coupled to the slave GALS circuit block 190 for data transfer. The slave GALS circuit block comprises the second LS circuit block 170, the second clock generator 160, the latch 150 and the slave clock controller, incorporating the arbiter 140 and the multiplexer 142.

If no data is being transferred between the master and the slave GALS circuit block, each LS circuit block is clocked by its respective clock generator, that is to say: The master and the slave GALS circuit block are independent from each other. During a data transfer, both LS circuit blocks are locked to the same clock generator. In Fig. 1, the second LS circuit block is coupled to the first clock generator; however, the reverse case is also possible.

In order to initiate a data transfer, the first LS circuit block outputs a first signal Ben to the master clock controller 120. As a result, the master clock controller 120 generates a transfer-request signal req and transmits it to the arbiter 140 of the slave GALS circuit block. Also, the master clock controller forwards the first clock signal mclk to the multiplexer 142 as well as to the latch 150. The arbiter further receives the second clock signal lclk from the second clock generator. The arbiter only forwards one of his two input signals, namely the one, which arrives first. For example, the transfer-request signal is forwarded as the indicator signal Bv to the second LS circuit block 170 if the second clock signal has a LOW level. The indicator signal Bv indicates to the second LS circuit block 170 that data is about to be or is being transferred.

If the transfer-request signal is forwarded by the arbiter 140 as the indicator signal Bv, the indicator signal Bv is then triggered by the latch 150, which is clocked by the inverted first clock signal mclk, thus becoming the lock signal lock. The lock signal controls the multiplexer 142. If the lock signal is active, the multiplexer 142 forwards the first clock signal mclk, thus locking the second LS circuit block to the first clock generator 130. If the lock signal is inactive, the second LS circuit block is supplied with the second clock signal lclk. Also, the lock signal causes the second clock generator 160 to pause generation of the second clock signal lclk.

In order to synchronize the clock locking, the master clock controller 120 first transmits a pause signal Ri to the first clock generator 130 upon receiving the first signal Ben, causing the first clock generator 130 to pause generation of the first clock signal mclk. The master clock controller 120 awaits the reception of a second acknowledgement signal Ai from the first clock controller 130 before finally outputting the transfer-request signal req. The indicator signal Bv is also fed back as a first acknowledgement signal ack (which is identical with the indicator signal Bv) to the master clock controller 120. When receiving the first acknowledgement signal ack, the first clock generator continues generating the first clock signal. As the indicator signal is triggered by the latch 150, clock locking is prevented from taking place when the first clock signal has a HIGH level, thus avoiding instabilities.

Fig. 2 shows a logic specification diagram of the master clock controller 120. In principle, the master clock controller is a low complex asynchronous controller which pauses the first clock generator when the first signal Ben arrives and activates the transfer-request signal.

The master clock controller is activated with reception of the first signal Ben from the first LS circuit block 110. The master clock controller then activates the pause signal Ri+ in order to pause the first clock generator 130. When receiving the second active acknowledgement signal Ai+ form the first clock generator, it transmits the transfer-request signal Req+ to the arbiter 140 of the slave clock controller. If the slave clock controller acknowledges the transfer-request signal with an active first acknowledgement signal ack+, the pause signal Ri- as well as second acknowledgement signal Ai- are deactivated as indication that the first clock generator 130 is no more paused, that is to say the control of the first clock generator is released. At this point, data can be transferred. When data transfer is finished, the first LS circuit block 110 deactivates the first signal Ben-. As a result, the transfer-request signal ack- and the first acknowledgement signal ack- are deactivated as well. At this point 210, the master clock controller 120 is ready to start controlling another data transfer.

A logic synthesis of the logic specification diagram of Fig. 2 yields two equations, which define the logic behavior of the master clock controller 120:

$$\mathrm{Ri} = \mathrm{Ben} \wedge \neg \mathrm{Ack} \qquad\qquad (1)$$

$$\mathrm{Req} = (\mathrm{Ben} \wedge \mathrm{Ack}) + \mathrm{Ai} \qquad\qquad (2)$$

Equations (1) and (2) clearly show that for the physical realization of the master clock controller 120, only a few gates are necessary. When implemented in 0.13 μm CMOS technology, the master clock controller 120 has an equivalent complexity of approximately only 3.8 inverter gates.

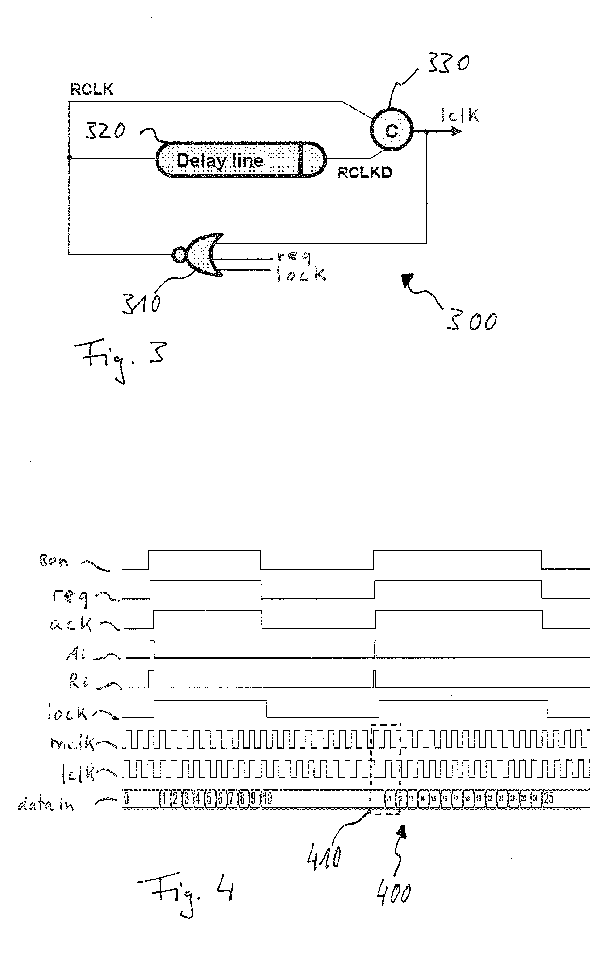

Fig. 3 shows an adopted clock generator 300 for either a master GALS circuit block or a slave GALS circuit block. However, in respect to the master slave setup depicted in Fig. 1, the clock generator 300 belongs to the slave GALS circuit block 190 and is therefore referred to as the second clock generator.

The second clock generator 300 (160) features a ring oscillator structure and comprises the standard elements of known clock generators for LS circuit blocks, that is a delay line 320 and a C-Element 330. The C-Element 330 with feedback mechanism is a logic block, which is often used within asynchronous circuits. The output signal of the C-Element 330 forms the second clock signal lclk. In addition, the second clock generator 300 (160) comprises a NOR-Gate 310 with three inputs. A first input is for the fed back second clock signal lclk. Two further inputs are reserved for the transfer-request signal req and the lock signal lock.

When no burst data is being transferred, that is when the second LS circuit block 170 is driven locally, the second clock generator 300 (170) behaves like a usual ring oscillator, outputting the second clock signal lclk to the second LS circuit block 170. When burst data is about to be or is being transmitted, that is when the transfer-request signal req or, respectively, the lock signal lock, is active, the second clock generator 300 (170) behaves like a pausable clock. Consequently, during burst-mode, the positive clock edge of the second clock signal lclk is disabled, whenever the transfer-request signal req arrives and until the lock signal lock has a HIGH level.

The complexity of the adopted clock generator 300 certainly depends on the duration of the delay provided by the delay line 320. For instance, the adopted clock generator 300 has a complexity of approximately 655 inverter gates, if the delay line 320 exhibits 128 delay slices. Such a delay line is adopted to support even low frequencies, such as 20 MHz.

Fig. 1 depicts the case when the slave GALS circuit block 190 is locked to the master GALS circuit block 180. However, the reverse case is, self-explanatory, also possible. In the latter, the lock signal is generated by the master clock controller 120 and the first clock generator is adopted instead of the second clock generator.

Fig. 4 shows a simulated signal flow during the transfer of data between a master and a slave GALS circuit block. Transmission of burst data is initiated with the first signal Ben from the first LS circuit block 180. When the lock signal lock is active, data is being transferred and both the first and the second LS circuit blocks 110 and 170 are clocked by the first clock signal mclk. A synchronization 410 between the first and the second LS circuit blocks 110 and 170 is only performed once when the data transfer is initiated. During data transfer, no further synchronization processes are necessary.

The simulation of the data throughput rate yields a frequency of the master input port controller of about 609 MHz for typical process variation temperature (PVT) conditions, which corresponds to approximately 33 fan-out 4 (FO4) inverter delays. This frequency substantially determines the throughput rate of the data transfer between the first and the second LS circuit block, if the first clock generator is locked to the second LS circuit block.

However, when applying the proposed method, the data throughput rate can be even higher since, during the burst transfer, there is no synchronization and clock is directly transferred from one LS circuit block to another. Therefore, during data transfer, the clock frequency of the master clock controller can be even higher than the aforementioned value. Certainly, the clock generator will be stopped during the first synchronization cycle and the clock signal period is increased for this cycle. High frequencies of the first and the second clock generators are currently rated at approximately 763 MHz (first clock generator) and 581 MHz (second clock generator).

A fan-out 4 inverter delay represents a technical unit which allows expressing technology independent processing delays of certain interfaces. The quantity of fan-out 4 inverter delays can be obtained by dividing the processing delay of a critical path of a controller with the delay of an inverter with a capacitive load of four components. The latter value can be extracted from a corresponding datasheet.

A data transfer by means of known pausable clocking interfaces are rated at an frequency which corresponds to approximately 100 FO4 inverter delays. Thus, the proposed method allows a data transfer whose throughput rate is a approximately three times as high as for know solutions while at the same time being less complex to implement.

**Claims**

1. A method for controlling data transfer from a first GALS circuit block (180) to a second GALS circuit block (190), comprising locking first (110) and second (170) locally synchronous circuit blocks of the first (180) and the second GALS circuit block (190), respectively, to a local clock source (130 or 160) of either the first (180) or the second (190) GALS circuit block during the data transfer.

2. The method of claim 1, wherein the first (110) and second (170) locally synchronous circuit blocks of the first (180) and the second (190) GALS circuit block are locked to that local clock source of the first and second local clock sources (130 or 160), whichever has a lower clock frequency.

3.  A method according to one of the claims 1 to 2, wherein locking comprises

    - providing a first signal (Ben) from a first locally synchronous circuit (110) of the first GALS circuit block (180) to a master clock controller (120) of the first GALS circuit block (180), the first signal (Ben) indicating that the data transfer is to be initiated;
    - providing a transfer-request signal (req) from the master clock controller (120) to a slave clock controller (140, 142) of the second GALS circuit block (190);
    - providing a first clock signal (mclk) from a first pausable clock generator (130) of the first GALS circuit block (180) to the first locally synchronous circuit block (110) and to the slave clock controller (140, 142);
    - providing a lock signal (lock) from the slave clock controller (140, 142) to a pausable second clock generator (160) of the second GALS circuit block (190), the lock signal (lock) instructing the second clock generator (160) to pause generating a second clock signal (lclk); and
    - providing the first clock signal (mclk) from the slave clock controller (140, 142) to the second locally synchronous circuit (170).

4.  A method according to claim 3, wherein

    - the slave clock controller arbitrates between the transfer-request signal (req) and the second clock signal (lclk) and forwards either the transfer-request signal (req) as an indicator signal (Bv) of an initiated data transfer to the second locally synchronous circuit (170) or the second local clock signal (lclk), whichever arrives first at the slave clock controller (140, 142).

5.  A method according to claim 3 or 4, wherein the lock signal (lock) is generated by latching (150) the indicator signal (Bv) with the first clock signal (mclk).

6.  A slave GALS circuit block (190), comprising

    - a second locally synchronous circuit (170);
    - a pausable local second clock generator (160), which is configured to generate a second local clock signal (lclk) for driving the second locally synchronous circuit (170); and
    - an second asynchronous wrapper,

    wherein the second asynchronous wrapper comprises a slave clock controller (140, 142), which is configured

    - to receive a transfer-request signal (req) from a first external GALS circuit (180);
    - to receive the first clock signal (mclk) from the first external GALS circuit block (180);
    - to receive the second local clock signal (lclk) from the second clock generator (160); and
    - to forward the first clock signal (mclk) in presence of the transfer-request signal (req), and to forward the second clock signal (lclk) in absence of the transfer-request signal.

7.  The slave GALS circuit block (190) of claim 6, wherein the slave clock controller (140, 142) is further configured to provide a lock signal (lock) to the second clock generator (160), the lock signal (lock) instructing the second clock generator (160) to pause generating the second clock signal (lclk).

8.  The slave GALS circuit block (190) of claim 6 or 7, wherein the slave clock controller (140, 142) comprises an arbiter (140), which is configured to arbitrate between the transfer-request signal (req) and the second clock signal (lclk) and to forward either the transfer-request signal (req) as an indicator signal (Bv) of an initiated data transfer to the second locally synchronous circuit (170) or the second local clock signal (lclk), whichever arrives first at the arbiter (140).

9.  The slave GALS circuit block (190) of claim 8, further comprising a latch (150), which is connected with the arbiter, and which is configured to receive the first clock signal (mclk) from the first external GALS circuit block (180) and to generate the lock signal (lock) by latching the indicator signal (Bv) with the first clock signal.

10. The slave GALS circuit block (190) of one of the claims 7 to 9, which is configured to provide the indicator signal (Bv) to the first external GALS (180) circuit as an acknowledgement (ack) of receiving the transfer-request signal (req).

11. A master GALS circuit block (180), comprising

- a first locally synchronous circuit (110);
- a pausable local first clock generator (130), which is configured to generate a first local clock signal (mclk) for driving the first locally synchronous circuit (110); and
- a first asynchronous wrapper,
wherein the first asynchronous wrapper comprises a master clock controller (120), which is configured to
- receive a first signal (Ben) from the first locally synchronous circuit (110), the first signal (Ben) indicating that the data transfer is to be initiated;
- to provide a transfer-request signal (req) to a second external GALS circuit (190); and
- to provide the first clock signal (mclk) to the second external GALS circuit block (190).

12. The master GALS circuit block (180) of claim 11, wherein the master clock controller (120) is configured to provide a pause signal (Ri) to the first clock generator, instructing the first clock generator (130) to pause generation of the first clock signal (mclk), until receiving an acknowledgement signal (ack) from the second external GALS circuit (190).

13. The master GALS circuit block (180) of claim 11 or 12, further comprising a slave clock controller, which is configured

- to receive a transfer-request signal from a third external GALS circuit;
- to receive a third clock signal from the third external GALS circuit block;
- to receive the first local clock signal (mclk) from the first clock generator (130); and
- to forward the third clock signal in presence of the transfer-request signal, and to forward the first clock signal in absence of the transfer-request signal.

14. An integrated circuit device, comprising a master GALS circuit of one of the claims 11 to 13, and a slave GALS circuit of one of the claims 5 to 10.

15. An integrated circuit device, which is configured to perform a method according to one of the claims 1 to 6.

Fig. 1

Fig. 2

Fig. 3

Fig. 4

Europäisches
Patentamt

European
Patent Office

Office européen
des brevets

## EUROPEAN SEARCH REPORT

Application Number

EP 09 15 7648

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/066526 A (IHP GMBH [DE]; GRASS ECKHARD [DE]; KRSTIC MILOS [DE]) 5 August 2004 (2004-08-05) * abstract * * page 1, line 1 - page 7, line 13 * * page 8, line 13 - page 9, line 6 * * page 11, line 19 - page 17, line 10; figures 1-3 * ----- | 1-15 | INV. G06F13/28 G06F13/42 |
| A | US 6 079 001 A (LE CHINH H [US] ET AL) 20 June 2000 (2000-06-20) * column 7, line 1 - column 7, line 27; figure 6 * ----- | 1-13 | |
| A | JP 2000 347989 A (NIPPON ELECTRIC CO; KYUSHU NIPPON DENKI TSUSHIN SY) 15 December 2000 (2000-12-15) * the whole document * ----- | 1-13 | |

TECHNICAL FIELDS
SEARCHED      (IPC)

G06F

The present search report has been drawn up for all claims

| Place of search | Date of completion of the search | Examiner |
|---|---|---|
| Berlin | 6 November 2009 | Leineweber, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 7648

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2009

| Patent document cited in search report | | Publication date | Patent family member(s) | | Publication date |
|---|---|---|---|---|---|
| WO 2004066526 | A | 05-08-2004 | AT | 328318 T | 15-06-2006 |
| | | | DE | 10303673 A1 | 12-08-2004 |
| | | | EP | 1590727 A2 | 02-11-2005 |
| | | | US | 2006161797 A1 | 20-07-2006 |
| US 6079001 | A | 20-06-2000 | CN | 1139238 A | 01-01-1997 |
| | | | DE | 69513113 D1 | 09-12-1999 |
| | | | DE | 69513113 T2 | 21-06-2000 |
| | | | EP | 0700001 A1 | 06-03-1996 |
| | | | JP | 8166902 A | 25-06-1996 |
| JP 2000347989 | A | 15-12-2000 | JP | 3420114 B2 | 23-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Practical Design of Globally-Asynchronous Locally-Synchronous Systems. **J. Muttersbach ; T. Villiger ; W. Fichtner.** Proceedings of the Sixth International Symposium on Advanced Research in Asynchronous Circuits and Systems. ASYNC'2000, 02 April 2000, 52-59

- **M. Krstic ; E. Grass ; C. Stahl ; M. Piz.** System Integration by Request-driven GALS Design. *IEEE Proc. Computers & Digital Techniques,* September 2006, vol. 153 (5), 362-372